(19) **Europäisches Patentamt**
**European Patent Office**
**Office européen des brevets**

(11) **EP 2 202 525 B1**

(12) **FASCICULE DE BREVET EUROPEEN**

(45) Date de publication et mention
de la délivrance du brevet:
**21.09.2011 Bulletin 2011/38**

(51) Int Cl.:
***G01P 13/02*** *(2006.01)* ***G01P 5/24*** *(2006.01)*

(21) Numéro de dépôt: **09179195.4**

(22) Date de dépôt: **15.12.2009**

(54) **Sonde de mesure aerodynamique d'un flux d'air le long d'une paroi**

Aerodynamische Messsonde zum Messen einen Luftstroms entlang einer Wand

Aerodynamic probe to measure air flow along a wall

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **23.12.2008 FR 0807392**

(43) Date de publication de la demande:
**30.06.2010 Bulletin 2010/26**

(73) Titulaire: **Thales
92200 Neuilly Sur Seine (FR)**

(72) Inventeur: **Choisnet, Joel
41100, NAVEIL (FR)**

(74) Mandataire: **Collet, Alain et al
Marks & Clerk France
Conseils en Propriété Industrielle
Immeuble " Visium "
22, avenue Aristide Briand
94117 Arcueil Cedex (FR)**

(56) Documents cités:
**DE-A1- 3 506 591**

**Description**

L'invention concerne une sonde de mesure aérodynamique d'un flux d'air le long d'une paroi. L'invention permet notamment la détermination de l'incidence d'un flux d'air par rapport à une référence axiale tangente à la paroi. L'invention trouve une utilité particulière dans le domaine aéronautique où la connaissance de l'incidence d'un flux d'air entourant un aéronef est essentielle au pilotage de l'aéronef. L'incidence par rapport à un plan horizontal est un paramètre important pour déterminer la portance de l'aéronef par exemple lors d'un atterrissage. L'incidence par rapport à un plan vertical est également importante, c'est le dérapage de l'aéronef. Pour déterminer ces deux paramètres, incidence et dérapage, on peut mesurer localement l'orientation du flux d'air par rapport à la peau de l'aéronef. Il s'agit de mesure d'incidences locales que l'on réalise en des points particuliers de l'aéronef. On peut également mesurer deux composantes de la vitesse du flux d'air en un point de la peau de l'aéronef pour déterminer la direction du flux d'air.

De nombreux principes de sondes sont connus et couramment utilisés pour les mesures de vitesse ou de direction d'écoulement.

Une première famille de sonde utilise un appendice sortant de la peau de l'aéronef. Cet appendice peut être fixe. Il peut comprendre des prises de pression d'air autour de cet appendice ou des capteurs d'effort exercé par le flux d'air. Cet appendice peut être mobile en forme de drapeau s'orientant dans l'axe du flux d'air. L'orientation du drapeau donne alors l'incidence du flux d'air. Dans la première famille de sonde on trouve également l'utilisation de l'effet vortex en réalisant des mesures sur des tourbillons en aval d'un corps cylindrique par exemple, l'utilisation de moulinets pour mesurer une vitesse d'écoulement suivant une direction donnée, l'utilisation d'un fil chaud comme anémomètre.

Les sondes de cette première famille sont fragiles du fait de la présence d'un corps extérieur à la peau de l'aéronef. Elles doivent être conçues pour résister à l'abrasion du flux d'air et surtout des particules qu'il peut véhiculer. Elles nuisent à l'aérodynamisme de l'aéronef en générant une trainée. Lors de vols en haute altitude, ces sondes doivent être dégivrées et consomment donc de la puissance électrique. Les sondes mobiles doivent comprendre des systèmes d'étanchéité entre partie fixe et mobiles avec le minimum de frottement.

Une seconde famille de sonde permet d'éliminer tout appendice extérieur à la peau de l'aéronef. Des systèmes optiques organisés autour de lasers existent, mais sont actuellement complexes, onéreux, encombrants. Ils restent généralement utilisés comme systèmes de référence.

Un grand intérêt s'est donc porté vers les systèmes à ultrasons, chez de nombreux constructeurs. L'idée de base est de mesurer les temps de propagation d'ondes acoustiques entre des éléments émetteurs et des récepteurs fixes les uns par rapport aux autres, pour identifier les vitesses d'une onde sonore, fonction de la vitesse du son et de la vitesse du fluide, suivant plusieurs directions, et enfin la direction de l'écoulement, par exemple l'incidence ou le dérapage dans les applications aéronautiques.

Plusieurs types de dispositifs sont actuellement connus. Dans le document US 4,143,548 : un émetteur génère une onde ultrasonore vers deux récepteurs respectivement situés en amont et en aval. La phase relative des signaux reçus donne une indication sur la différence des vitesses dans chacun des deux directions de propagation, vers l'amont et vers l'aval. Ce dispositif suppose implicitement que les signaux ne soient pas perturbés pour que l'on puisse mesurer la phase entre deux signaux sinusoïdaux. Par ailleurs ce dispositif impose des contraintes sur la fréquence ou longueur d'onde vis à vis de la distance entre émetteur et récepteurs. Enfin les récepteurs doivent être identiques en termes de fonction de transfert et de retard intrinsèque.

Les documents US 4,112,756, DE 3506591 et US 4,890,488 proposent des idées similaires, avec mesures de temps de propagation entre des émetteurs et des récepteurs selon différentes configurations.

Le document US 5,585,557 propose un dispositif entièrement passif, c'est à dire sans émetteur. Des turbulences de l'écoulement sont reçues et détectées par un premier récepteur et se propagent en aval, où elles sont reçues et détectées par d'autres récepteurs situés à une même distance, avec des retards dépendant des caractéristiques de l'écoulement en direction et vitesse. Les temps de transit sont calculés à partir de calculs de corrélation croisée entre les signaux. Une estimée de la direction de l'écoulement est celle qui est définie par le premier récepteur et le récepteur situé en aval présentant le plus faible temps de transit. La précision du système est liée au nombre de capteurs.

Le document US 7,155,969 propose une amélioration et une simplification du précédent, utilisant un plus faible nombre de capteurs, et capable de fonctionner à travers la peau de l'avion. Ces capteurs ne sont pas nécessairement des capteurs acoustiques type microphones qui nécessitent des passages dans la peau de l'avion pour détecter les fluctuations de pression, mais pourraient aussi bien être des accéléromètres, des jauges de contraintes ou autres capteurs montés sur la peau de l'avion par exemple. La propagation des fluctuations de pression générées par la turbulence peut être remplacée par la propagation d'une excitation mécanique de la peau de l'avion au moyen d'un dispositif adéquat, capteur actif piézoélectrique par exemple. Les mesures de temps de propagation se font également à partir de calculs de corrélation croisée entre les signaux reçus par les différents capteurs.

Tous ces documents décrivent des systèmes comprenant plusieurs capteurs récepteurs de signaux, et on utilise des écarts entre les signaux reçus pour remonter aux temps de propagation, puis aux vitesses, et finalement à la direction de l'écoulement.

La mesure expérimentale du temps de parcours entre un émetteur et un récepteur s'avère être plus grande que celle prévue par la théorie, à une valeur relativement constante près. En conséquence les méthodes de mesures des temps de parcours nécessitent des étalonnages des récepteurs, chacun ayant ses caractéristiques propres de temps de réponse, bande passante etc... Ces étalonnages des récepteurs sont fonction des conditions environnementales, température et pression en particulier. La mesure précise de l'incidence à partir des mesures de temps de parcours des ondes ultrasonores s'avère donc assez complexe, du fait des caractéristiques des différents récepteurs. Dans le cas des systèmes totalement passifs, sans aucun excitateur actif, les signaux acoustiques reçus sont simplement un bruit acoustique. Un dysfonctionnement de l'un des capteurs récepteurs est ainsi difficilement détectable, sauf peut-être si le capteur est en court-circuit franc. D'autre part les calculs de corrélation croisée nécessitent des échantillonnages et mémorisation de signaux de faibles niveaux pour pouvoir être effectués.

Enfin tous ces systèmes supposent implicitement que le signal de type bruit acoustique se propage identiquement à lui même, ce qui n'est qu'une première approximation.

L'objet de l'invention est de remédier à ces défauts en proposant une méthode plus simple et plus fiable de mesure de temps de propagation d'une onde entre deux points donnés.

A cet effet, l'invention a pour objet une sonde de mesure aérodynamique d'un flux d'air le long d'une paroi, caractérisé en ce qu'il comprend plusieurs émetteurs pouvant émettre chacun une onde sonore et un récepteur sensible aux différentes ondes sonores.

Avantageusement la sonde comprend des moyens de mesure des temps de parcours entre chacun des émetteurs et le récepteur.

On a vu précédemment que la mesure de temps de parcours entre un émetteur et un récepteur était entachée d'une erreur. Le déposant s'est aperçu que cette erreur était principalement due au récepteur et non à l'émetteur. En n'utilisant qu'un seul récepteur et plusieurs émetteurs, l'erreur sur la mesure reste constante et une seule calibration reste nécessaire.

L'invention sera mieux comprise et d'autres avantages apparaîtront à la lecture de la description détaillée d'un mode de réalisation donné à titre d'exemple, description illustrée par le dessin joint dans lequel :

la figure 1 représente un exemple de répartition d'un récepteur et de plusieurs émetteurs ;
les figures 2a à 2e représentent sous forme de chronogramme, des signaux émis par les émetteurs et reçus par le récepteur.

Par souci de clarté, les mêmes éléments porteront les mêmes repères dans les différentes figures.

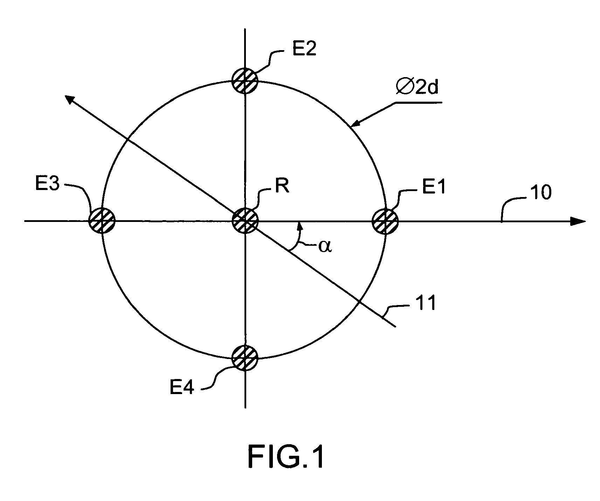

La figure 1 représente un dispositif conforme à l'invention et comportant quatre émetteurs E1, E2, E3, E4, par exemple identiques, et un récepteur unique R. Il est bien entendu possible de mettre en oeuvre l'invention à partir de deux émetteurs pouvant émettre une onde sonore reçue par le récepteur unique R. L'onde sonore peut être ultrasonore, par exemple à une fréquence de l'ordre de 40kHz. Le récepteur R peut être un microphone sensible aux ondes émises par les émetteurs ou résonnant, c'est-à-dire sensible à une fréquence particulière.

Les émetteurs E1, E2, E3 et E4 sont tous sensiblement coplanaires dans un plan tangent à la surface d'une paroi, par exemple la peau d'un avion. Le plan tangent à la surface de la peau est celui de la figure 1. Les émetteurs E1, E2, E3 et E4 sont avantageusement répartis autour du récepteur R. Ils peuvent être situés à égale distance d du récepteur R, et avec un pas de 90° autour du récepteur R. Autrement dit, les émetteurs E1 à E4 sont tous situés sur un cercle de diamètre 2d centré sur le récepteur R et régulièrement répartis sur ce cercle. Pour une mesure d'incidence, le récepteur R est disposé sensiblement dans un plan de symétrie horizontal de l'avion, la direction E3-E1 est une référence longitudinale 10, parallèle au plan de symétrie horizontal de l'avion. La direction d'un flux d'air, représentée par un axe 11, fait un angle $\alpha$ avec cette référence, $\alpha$ est l'incidence locale que l'on se propose de mesurer. Pour une mesure de dérapage de l'avion, le récepteur R est disposé sensiblement dans un plan de symétrie vertical de l'avion.

En appelant c la vitesse du son, M le nombre de Mach local et V la vitesse locale du flux d'air au niveau du récepteur R, on a : M = V/c. On montre que le temps de parcours théorique T1 d'une onde sonore émise par l'émetteurs E1 et reçue par la récepteur R est donné par :

$$T1 = \frac{d}{c} \frac{M.\cos\alpha + \sqrt{1 - M^2\sin^2\alpha}}{1 - M^2} \qquad (1)$$

Cette formule tient compte du fait que la position du récepteur R a varié entre l'instant où l'onde sonore est émise par l'émetteur E1 et celui où elle est reçue par la récepteur R.

Les temps de propagation T2, T3 et T4, respectivement pour les émetteurs E2, E3, et E4, s'obtiennent par des formules similaires en remplaçant respectivement $\alpha$ par $(\alpha + \pi / 2)$, $(\alpha + \pi)$, $(\alpha + 3 \pi / 2)$.

L'incidence α s'obtient alors par la formule :

$$\text{Tangente } (\alpha) = (T2-T4)/(T3-T1) \qquad (2)$$

En pratique, on mesure des temps de parcours entachés d'une erreur. Les temps de parcours mesurés sont notés T'1, T'2, T'3 et T'4 respectivement entre chacun des émetteurs E1 à E4 et le récepteur R. Comme on l'a vu précédemment, l'erreur de mesure e reste constante pour le récepteur R. On a donc :

$$T'1 = T1 + e \qquad (3)$$

$$T'2 = T2 + e \qquad (4)$$

$$T'3 = T3 + e \qquad (5)$$

$$T'4 = T4 + e \qquad (6)$$

Le fait de retrancher les mesures de temps de parcours deux à deux, permet donc d'éliminer cette erreur e même sans connaitre sa valeur exacte. On donc :

$$T3-T1 = T'3-T'1 \qquad (7)$$

et

$$T4-T2 = T'4-T'2 \qquad (8)$$

La formule de calcul de l'incidence α à partir des valeurs mesurées des temps de parcours T'1, T'2, T'3 et T'4 devient donc :

$$\text{Tangente } (\alpha) = (T'2-T'4)/(T'3-T'1) \qquad (9)$$

Après avoir déterminé l'incidence locale du flux d'air il est possible de déterminer la vitesse du flux d'air exprimée en nombre de Mach. On peut également déterminer la vitesse du flux d'air exprimée plus classiquement dans une unité du système international ou en noeuds selon une convention généralisée dans le domaine aéronautique à patir de la température du flux d'air et de sa pression.

Avantageusement, il est préférable de mesurer successivement les temps de parcours T'1, T'2, T'3 et T'4, en activant séquentiellement les émetteurs, pour pouvoir les discriminer facilement. On peut cependant imaginer des mesures simultanées, si les formes d'onde émises par les émetteurs sont suffisamment différentes pour pouvoir discriminer les temps de parcours T'1, T'2, T'3 et T'4. L'exploitation des signaux reçus par le récepteur R est alors plus complexe.

La sonde peut comprendre des moyens pour détecter un déphasage d'un signal reçu par le récepteur R par rapport à un signal émis par un des émetteursE1, E2, E3 et E4. Dans ce cas, l'onde sonore émise peut être une onde dont une fréquence est modulée. Un exemple d'une telle modulation est connu dans la littérature anglo-saxonne sous le nom de « Chirp » pour gazouillis. Il s'agit par exemple d'un signal sinusoïdal dont la fréquence varie linéairement dans le temps autour d'une fréquence centrale. Le dispositif comprend alors des moyens pour décoder une modulation en fréquence du signal reçu par le récepteur R.

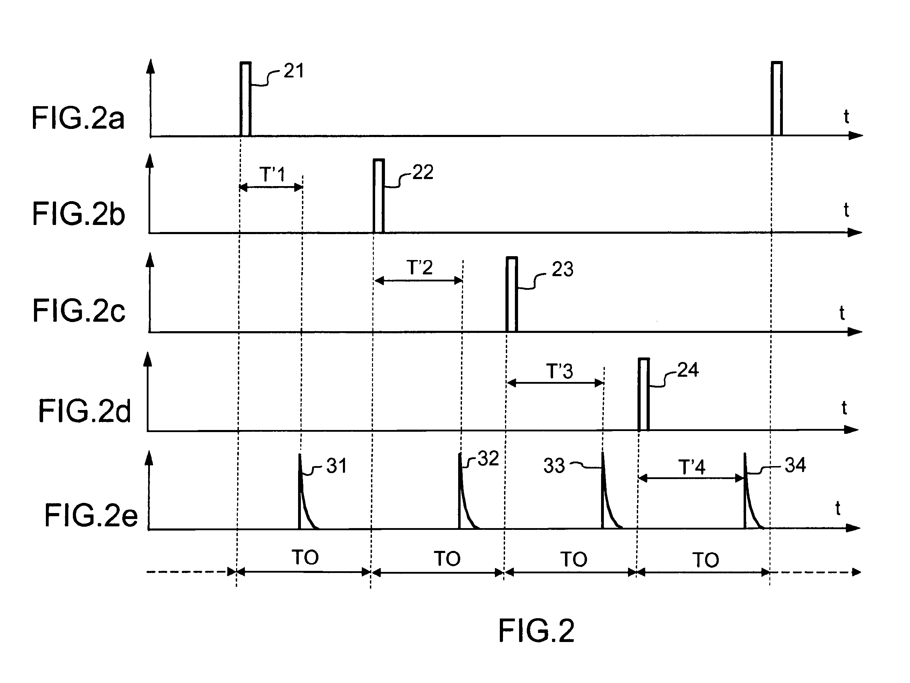

Les figures 2a à 2e représentent sous forme de chronogramme simplifié un exemple de signaux émis et reçus selon l'invention. Les figures 2a à 2d représentent l'amplitude en fonction du temps t d'un signal émis respectivement par chacun des émetteurs E1 à E4. La figure 2e représente l'amplitude du signal reçu par le récepteur R en fonction de la même échelle de temps. Les quatre émetteurs E1 à E4 sont successivement activés par un signal représenté ici sous forme d'une impulsion brève de type impulsion de Dirac, respectivement 21 à 24. L'intérêt d'une telle impulsion réside dans le fait qu'elle comprend un front lors de son établissement.

Le temps s'écoulant entre deux impulsions consécutives est avantageusement choisi tel qu'il soit toujours supérieur au plus grand des temps de parcours possible entre l'un quelconque des émetteurs E1 à E4 et le récepteur R, afin qu'il n'y ait pas d'ambiguïté dans la réception par le récepteur R. Ici on a choisi des durées égales TO pour séparer deux impulsions consécutives. Il est bien entendu possible de réduire la durée TO en prévoyant des moyens de discrimination des différents signaux reçus par le récepteur R. Pour ce faire, l'onde sonore émise par les différents émetteurs E1 à E4 peut être une onde dont une fréquence est modulée. Le dispositif comprend alors des moyens pour décoder une modulation en fréquence du signal reçu par le récepteur R.

Des impulsions 31 à 34 sont détectées successivement par le récepteur R. La forme du signal représentée n'est qu'une approximation de la réalité. Les impulsions 31 à 34 correspondent respectivement à la détection par le récepteur R des impulsions 21 à 24 émises par chacun des émetteurs E1 à E4.

Les temps de propagation mesurés T'1, T'2, T'3, et T'4 sont déterminés par l'écart entre les fronts de montée des signaux émis 21 à 24 et les signaux respectifs reçus 31 à 34. Les fronts de montée des signaux émis 21 à 24 sont très bien identifiés par des signaux électriques d'excitation des émetteurs E1 à E4.

Le signal reçu peut ne pas présenter de front de montée aussi net du fait de la propagation de l'onde sonore dans l'air. Pour pallier cette difficulté, la sonde comprend avantageusement des moyens de traitement d'un signal reçu par le récepteur R, les moyens de traitement comprenant des moyens pour former un signal enveloppe du signal reçu et des moyens pour générer un signal binaire dont un front montant apparait lorsque le signal enveloppe dépasse un premier seuil et dont un front descendant apparait lorsque le signal enveloppe passe en dessous d'un second seuil, le premier seuil étant supérieur au second seuil. Les moyens pour générer le signal binaire peuvent comprendre un trigger de Schmitt.

Les fronts montants ainsi générés sont alors retardés par leur mise en forme, mais d'une quantité égale pour toutes les impulsions reçues correspondant aux différents émetteurs E1 à E4. Ce retard qui s'ajoute au temps de réponse propre du récepteur R n'affecte donc pas la mesure des différences de temps de propagation, qui est la seule utile pour la mesure de l'incidence.

L'invention présente l'avantage d'une détection facile d'une panne de l'un quelconque des émetteurs E1 à E4 ou du récepteur R. L'absence d'une impulsion 31 à 34 permet de déterminer que l'émetteur correspondant est en panne. L'absence de toutes les impulsions permet de déterminer soit que le récepteur R est en panne soit que l'ensemble de la sonde est en panne.

Une variante de réalisation de sonde permettant de déterminer l'incidence du flux d'air peut être mise en oeuvre à partir de trois émetteurs et un récepteur. Les équations à résoudre sont plus complexes, et il est nécessaire de calculer également la vitesse du son c et la vitesse de l'écoulement. Cette variante présente néanmoins l'avantage de diminuer le nombre d'émetteurs.

**Revendications**

1. Sonde de mesure aérodynamique d'un flux d'air le long d'une paroi, **caractérisée en ce qu'**elle comprend plusieurs émetteurs (E1, E2, E3, E4) pouvant émettre chacun une onde sonore et un récepteur (R) sensible aux différentes ondes sonores.

2. Sonde selon la revendication 1, **caractérisée en ce qu'**elle comprend des moyens de mesure des temps de parcours (T'1, T'2, T'3, T'4) entre chacun des émetteurs (E1, E2, E3, E4) et le récepteur (R).

3. Sonde selon l'une des revendications précédentes, **caractérisée en ce que** les émetteurs (E1, E2, E3, E4) sont répartis autour du récepteur (R).

4. Sonde selon l'une des revendications précédentes, **caractérisée en ce que** les émetteurs (E1, E2, E3, E4) sont situés à égale distance (d) du récepteur (R).

5. Sonde selon l'une des revendications précédentes, **caractérisée en ce qu'**elle comprend quatre émetteurs (E1, E2, E3, E4) situés avec un pas de 90° autour du récepteur (R).

**6.** Sonde selon les revendications 2 et 5, **caractérisée en ce qu'**elle comprend des moyens pour déterminer une incidence α du flux d'air par rapport à un axe passant par deux des émetteurs (E1, E3) à partir d'une équation :

$$\text{Tangente } (\alpha) = (T'2\text{-}T'4)/(T'3\text{-}T'1)$$

dans laquelle T'1 à T'4 représentent les temps de parcours entre chacun des émetteurs (E1, E2, E3, E4) et le récepteur (R).

**7.** Sonde selon l'une des revendications précédentes, **caractérisée en ce qu'**elle comprend des moyens pour générer une onde sonore comprenant un front vers chacun des émetteurs (E1, E2, E3, E4).

**8.** Sonde selon l'une des revendications 2 à 7 en tant que revendication dépendante de la revendication 2, **caractérisé en ce qu'**elle comprend des moyens pour activer séquentiellement les émetteurs (E1, E2, E3, E4) de façon à mesurer successivement les temps de parcours (T'1, T'2, T'3 et T'4).

**9.** Sonde selon la revendication 8, **caractérisée en ce qu'**elle comprend des moyens pour générer une onde sonore vers chacun des émetteurs (E1, E2, E3, E4) et en que les ondes sonores sont décalées temporellement d'au moins un temps maximal de parcours (T0) entre une des émetteurs (E1, E2, E3, E4) et le récepteur (R).

**10.** Sonde selon l'une des revendications précédentes, **caractérisée en ce que** le récepteur (R) est résonnant.

**11.** Sonde selon l'une des revendications précédentes, **caractérisée en ce qu'**elle comprend des moyens de traitement d'un signal reçu par le récepteur (R), les moyens de traitement comprenant des moyens pour former un signal enveloppe du signal reçu et des moyens pour générer un signal binaire dont un front montant apparait lorsque le signal enveloppe dépasse un premier seuil et dont un front descendant apparait lorsque le signal enveloppe passe en dessous d'un second seuil et **en ce que** le premier seuil est supérieur au second seuil.

**12.** Sonde selon l'une des revendications 1 à 9, **caractérisée en ce qu'**elle comprend des moyens pour détecter un déphasage d'un signal reçu par le récepteur (R) par rapport à un signal émis par un des émetteurs (E1, E2, E3, E4).

**13.** Sonde selon la revendication 10, **caractérisée en ce que** l'onde sonore émise est une onde dont une fréquence est modulée et **en ce que** le dispositif comprend des moyens pour décoder une modulation en fréquence du signal reçu par le récepteur (R).

**Claims**

**1.** An aerodynamic probe for measuring air flow along a wall, **characterised in that** it comprises several emitters (E1, E2, E3, E4) each being able to emit a sound wave, and a receiver (R) sensitive to the various sound waves.

**2.** The probe according to claim 1, **characterised in that** it comprises means for measuring the transit times (T'1, T'2, T'3, T'4) between each of the emitters (E1, E2, E3, E4) and the receiver (R).

**3.** The probe according to any one of the preceding claims, **characterised in that** the emitters (E1, E2, E3, E4) are distributed around the receiver (R).

**4.** The probe according to any one of the preceding claims, **characterised in that** the emitters (E1, E2, E3, E4) are located at an equal distance (d) from the receiver (R).

**5.** The probe according to any one of the preceding claims, **characterised in that** it comprises four emitters (E1, E2, E3, E4) located at a pitch of 90° around the receiver (R).

**6.** The probe according to claims 2 and 5, **characterised in that** it comprises means for determining an incidence α of the air flow relative to an axis passing through two of the emitters (E1, E3) based on the following equation:

$$\text{Tangent } (\alpha) = (T'2 - T'4)/(T'3 - T'1)$$

wherein T'1 to T'4 represent the transit times between each of the emitters (E1, E2, E3, E4) and the receiver (R).

7. The probe according to any one of the preceding claims, **characterised in that** it comprises means for generating a sound wave comprising an edge towards each of the emitters (E1, E2, E3, E4).

8. The probe according to any one of claims 2 to 7 as dependent on claim 2, **characterised in that** it comprises means for sequentially activating the emitters (E1, E2, E3, E4) so as to successively measure the transit times (T'1, T'2, T'3 and T'4).

9. The probe according to claim 8, **characterised in that** it comprises means for generating a sound wave towards each of the emitters (E1, E2, E3, E4) and **in that** the sound waves are time offset by at least a maximum transit time (TO) between one of the emitters (E1, E2, E3, E4) and the receiver (R).

10. The probe according to any one of the preceding claims, **characterised in that** the receiver (R) is resonant.

11. The probe according to any one of the preceding claims, **characterised in that** it comprises means for processing a signal received by the receiver (R), the processing means comprising means for forming an envelope signal of the received signal and means for generating a binary signal wherein a rising edge appears when the envelope signal exceeds a first threshold and wherein a falling edge appears when the envelope signal passes below a second threshold, and **in that** the first threshold is greater than the second threshold.

12. The probe according to any one of claims 1 to 9, **characterised in that** it comprises means for detecting a phase shift of a signal received by the receiver (R) relative to a signal emitted by one of the emitters (E1, E2, E3, E4).

13. The probe according to claim 10, **characterised in that** the emitted sound wave is a wave having a modulated frequency and **in that** the device comprises means for decoding a frequency modulation of the signal received by the receiver (R).

**Patentansprüche**

1. Aerodynamische Sonde zum Messen eines Luftstroms entlang einer Wand, **dadurch gekennzeichnet, dass** sie mehrere Sender (E1, E2, E3, E4), die jeweils eine Schallwelle aussenden können, und einen Empfänger (R) umfasst, der für die verschiedenen Schallwellen empfindlich ist.

2. Sonde nach Anspruch 1, **dadurch gekennzeichnet, dass** sie Mittel zum Messen der Laufzeiten (T'1, T'2, T'3, T'4) zwischen den einzelnen Sendern (E1, E2, E3, E4) und dem Empfänger (R) umfasst.

3. Sonde nach einem der vorherigen Ansprüche, **dadurch gekennzeichnet, dass** die Sender (E1, E2, E3, E4) um den Empfänger (R) herum verteilt sind.

4. Sonde nach einem der vorherigen Ansprüche, **dadurch gekennzeichnet, dass** die Sender (E1, E2, E3, E4) denselben Abstand (d) vom Empfänger (R) haben.

5. Sonde nach einem der vorherigen Ansprüche, **dadurch gekennzeichnet, dass** sie vier Sender (E1, E2, E3, E4) umfasst, die in einem Abstand von 90° um den Empfänger (R) herum verteilt sind.

6. Sonde nach den Ansprüchen 2 und 5, **dadurch gekennzeichnet, dass** sie Mittel zum Ermitteln eines Einfallswinkels α des Luftstroms relativ zu einer durch zwei der Sender (E1, E3) verlaufenden Achse umfasst, anhand der folgenden Gleichung:

$$\text{Tangente } (\alpha) = (T'2 - T'4)/(T'3 - T'1)$$

wobei T'1 bis T'4 die Laufzeiten zwischen den einzelnen Sendern (E1, E2, E3, E4) und dem Empfänger (R) repräsentieren.

7. Sonde nach einem der vorherigen Ansprüche, **dadurch gekennzeichnet, dass** sie Mittel zum Erzeugen einer Schallwelle mit einer Flanke zu den einzelnen Sendern (E1, E2, E3, E4) hin umfasst.

8. Sonde nach einem der Ansprüche 2 bis 7 als von Anspruch 2 abhängiger Anspruch, **dadurch gekennzeichnet, dass** sie Mittel zum sequentiellen Aktivieren der Sender (E1, E2, E3, E4) umfasst, um die Laufzeiten (T'1, T'2, T'3 und T'4) nacheinander zu messen.

9. Sonde nach Anspruch 8, **dadurch gekennzeichnet, dass** sie Mittel zum Erzeugen einer Schallwelle zu jedem der Sender (E1, E2, E3, E4) umfasst, und dadurch, dass die Schallwellen zeitlich um wenigstens eine maximale Laufzeit (T0) zwischen einem der Sender (E1, E2, E3, E4) und dem Empfänger (R) versetzt sind.

10. Sonde nach einem der vorherigen Ansprüche, **dadurch gekennzeichnet, dass** der Empfänger (R) resonant ist.

11. Sonde nach einem der vorherigen Ansprüche, **dadurch gekennzeichnet, dass** sie Mittel zum Verarbeiten eines vom Empfänger (R) empfangenen Signals umfasst, wobei die Verarbeitungsmittel Mittel zum Formen einer Hüllkurve des empfangenen Signals und Mittel zum Erzeugen eines binären Signals umfasst, von dem eine ansteigende Flanke erscheint, wenn die Hüllkurve einen ersten Schwellenwert übersteigt, und von dem eine abfallende Flanke erscheint, wenn die Hüllkuve unter einen zweiten Schwellenwert abfällt, und dadurch, dass der erste Schwellenwert größer ist als der zweite Schwellenwert.

12. Sonde nach einem der Ansprüche 1 bis 9, **dadurch gekennzeichnet, dass** sie Mittel zum Erkennen einer Phasenverschiebung eines vom Empfänger (R) empfangenen Signals relativ zu einem von einem der Sender (E1, E2, E3, E4) ausgesendeten Signal umfasst.

13. Sonde nach Anspruch 10, **dadurch gekennzeichnet, dass** die ausgesendete Schallwelle eine Welle mit einer modulierten Frequenz ist, und dadurch, dass die Vorrichtung Mittel zum Decodieren einer Frequenzmodulation des vom Empfänger (R) empfangenen Signals umfasst.

FIG.1

FIG.2a

FIG.2b

FIG.2c

FIG.2d

FIG.2e

FIG.2

EP 2 202 525 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4143548 A
- US 4112756 A
- DE 3506591
- US 4890488 A
- US 5585557 A
- US 7155969 B